# EUROPEAN PATENT SPECIFICATION

(11) **EP 3 142 117 B1**
(45) Date of publication and mention of the grant of the patent: **01.01.2020**
(21) Application number: 15185117.7
(22) Date of filing: 14.09.2015
(51) Int. Cl.: G11B 27/10, H04N 21/433, H04N 21/8549, G11B 27/034

(54) **CONTENT PLAYBACK APPARATUS INCLUDING A PLAYBACK RESUME FUNCTION**
INHALTSWIEDERGABEVORRICHTUNG MIT EINER WIEDERGABEWIEDERAUFNAHMEFUNKTION
APPAREIL DE LECTURE DE CONTENU COMPRENANT UNE FONCTION DE REPRISE DE REPRODUCTION

(43) Date of publication of application: 15.03.2017
(73) Proprietor: TP Vision Holding B.V., 1097 JB Amsterdam (NL)
(72) Inventor: Muroor Prabhu, Sudhir, 560045 Nagawara, Bangalore (IN)
(74) Representative: DREISS Patentanwälte PartG mbB

(56) References cited:
- WO-A1-2008/093321
- WO-A1-2012/052790
- JP-A- 2001 285 760
- US-A- 5 818 439
- US-A1- 2008 212 939
- US-A1- 2013 308 921

## Description

### FIELD OF THE INVENTION

The invention relates to a content playback apparatus including a resume function for resuming in response to a resumption command a playback of content at a stop position where a previous playback has been has been stopped at a previous moment in time.

### BACKGROUND OF THE INVENTION.

Modern Televisions support recording and playback of video content. Broadcast content can be recorded in local storage or remote storage and played back at later in time. Video content downloaded from the Internet into a storage device can be played back on the TV. While playing back any of the above mentioned content, it may happen that for one or another reason the user does not watch the complete content, but stops watching before the end of the video content is reached. Often the user has the intention to watch the rest of the content at a later moment in time.

In case he waits a long time before he resumes the watching of the video content he will not remember anymore the details of the video content already watched.

US2009/0169172 discloses a content playback apparatus having a resume function to resume the playback at the location where a previous play back has stopped. The apparatus measures the time difference between the moment that the playback stopped and the moment that the user initiates a playback of the content again. In case the time difference is below a predetermined limit value the playback is then resumed at the place where the previous playback has stopped. However in case the limit value is exceeded by the determined time difference the playback is not resumed at the location where the previous playback has stopped, but the playback is started from the beginning of the content.

US2008/212939 discloses a mobile terminal including a storage unit which stores content data which contains sequential content, a playback unit which plays back the content data stored in the storage unit, and a control unit connected to the storage unit and the playback unit, and the control unit executes the following control. That is, when a playback restart request is issued for the interrupted content data, whether a synopsis needs to be played back is determined based on a predetermined synopsis playback condition. When it is determined that the synopsis needs to be played back, the playback unit plays back synopsis data corresponding to the content data before an interruption position, and plays back the content data from the interruption position.

US5818439 discloses a video terminal device capable of controlling video playback by a controller storing a position of the video program at which it was interrupted by the user. The interrupted position is stored in a video library of a video server. Images representative of a portion from the start or another position of the interrupted video program up to the interrupted position are extracted by a video digest making program. The extracted representative images are represented by a list display based on reduced icons or a digest image. The list or the digest image is displayed before resuming the interrupted video program.

JP2001285760 A discloses to set a reproduction start location based on elapsed time information and the interruption location. If the elapsed time after interruption of reproduction is larger than a second threshold digest reproduction e.g. high-speed search play is performed.

US2013/308921 discloses a playback device configured to: receive a video for playing on the playback device; generating a synopsis index of video clips from the video; playing the video until the play is suspending before reaching an end of the video; checkpointing the location in the video timeline at which the video play was suspended; and storing the checkpointed location.

WO2012/052790 discloses a method and electronic device for resuming multimedia content playback for display on the electronic device. The method includes: receiving a command to render multimedia content from a user input device, wherein the multimedia content includes previously viewed multimedia content and un-viewed multimedia content; selecting one or more segments of the previously viewed multimedia content; displaying a thumbnail that corresponds to the selected one or more segments on a display of the electronic device to provide a visual summary of the previously viewed content; and displaying at least a portion of the un-viewed multimedia content after at least a portion of the visual summary is displayed on the display.

### SUMMARY OF INVENTION

It is an object of the invention to provide a content playback apparatus with an improved resume function. The invention is defined in the appended claims.

According to the invention this object is achieved by a content playback apparatus including a resume function for resuming, in response to a resumption command, a playback of the content at a stop position where a previous playback has been has been stopped at a previous moment in time, the content playback apparatus comprising: a playback section for playing back the content, and a control section for controlling the playback apparatus in a normal playback mode and in a preview mode, whereby in the normal mode the content is played back at normal speed and whereby in the preview mode the content is played back in a playback time condensing mode which requires less playback time than in the normal mode, which control section is arranged to start in response to the resumption command a playback in the preview mode from a restart position located before the stop position and to switch control to the normal mode when the stop position is reached.

By playing back a part of the content located before the stop position the user is given information about the content already played back in a condensed time interval, so that he is able to recall details about this part just before the playback is resumed at the position where it was stopped. An embodiment of the playback apparatus comprises a timer section for determining a time difference between the moment of the resumption command is given and the previous moment in time, whereby the control section is arranged to adjust the preview mode in dependence on the determined time difference.

This enables providing more information about the content already played in case the previous playback has been stopped longer ago, taking into account that the user needs more information to recall details of the content already played back when more time has expired since he stopped the playback.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a first embodiment of the playback apparatus according to the invention,
Fig. 2 shows schematically a representation of content.
Fig. 3 shows for a playback apparatus according to the invention a time line for a playback situation in which a playback is stopped and later on resumed,
Fig. 4 shows schematically a suitable manner for controlling the playback in the preview mode, and
Fig. 5 shows another embodiment of the playback apparatus according to the invention.

### DETAILED DESCRIPTION OF EMBODIMENTS

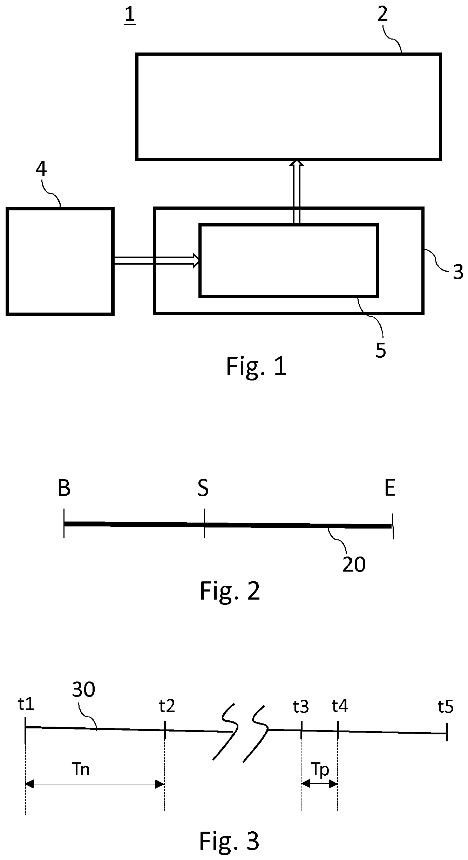

Fig 1 shows a first embodiment of a content playback apparatus 1 according to the invention. The content playback apparatus 1 comprises a playback section 2 for playing back content, for example video content, audio content or multimedia content. A control section 3 is coupled to the playback section 2 for controlling the playback. The control section 3 can control the playback section in a normal mode and in a preview mode. In the normal mode the playback section 2 plays back the content at normal speed, which corresponds with the intended rendering speed for the content. This is usually the rendering speed with which the content is rendered in natural motion.

In the preview mode the content is played back in a playback time condensing mode, in which content of a content partition of a certain length is played back within a time frame which is shorter than required for the playback of the same partition with normal speed. So during the preview operation the user will only get an impression of what the content is about, but he will not receive all information to understand the content in all its details.

A command section 4 provides control commands to the control section 3, which in response to the control command controls the playback section as prescribed by the control command provided. The command section 4 comprises an user interface of a usual type which is for example provided with a number of command keys, including a Playback-key, a Stop-key and a Resume-key for initiating corresponding operations of the playback section 2. In response to an actuation of a command key the command section 4 control forwards a corresponding control command to the control section 3.

The control section 3 comprises circuitry 5 which derives from the received control commands control signals for the playback section 2, so as to control operations of the playback section 2 prescribed by the control commands.

The circuitry 5 can consist of hardwired circuitry or circuitry comprising a processor which operates under control of software stored in a program memory of the control section 3.

In response to an actuation of the Playback-key a Playback command is forwarded to the control section 3 which then switches the control to the normal playback mode. The playback section 2 then starts the playback of the content CONT at a beginning position of the content and plays back the content CONT at normal speed. The normal playback mode automatically ends as soon as an end of the content is reached.

The user can stop the normal playback before the end of the content is reached by actuating the Stop-key. The command section 4 then forwards a Stop command to the control section 3

In response to a Stop command, the control section 3 stops the play back. Moreover the control section 3 stores information indicating the stop location where the play back has stopped.

In response to an actuation of the Resume-key the command section 4 forwards a Resumption command to the control section 3. The control section 3 is arranged to start in response to the Resumption command an operation which results in a resumption of the normal playback starting from the stop location. However before the resumption take place a preview operation is performed. In this preview operation a part of the content located before the stop location is played back in a time condensing mode. The playback in the time condensing mode starts at a restart position located before the Stop position and continues until the stop position is reached. As soon as the stop position is reached the control section 3 switches the control to the normal playback mode.

In Fig 2 a line 20 schematically represents a content CONT with a begin position B and an end position E. A position wherein a previous play back is stopped is indicated by reference sign S.

Fig 3 shows a time line 30 for a playback situation in which a playback is stopped at the stop position S and later on resumed.

At t1 the user has actuated the Playback-key resulting in a playback of the content CONT at normal speed starting at begin location B. At t2 the user actuated the Stop-key resulting in the play back stopping and information indicating the stop location S is stored in the control section 3.

Later in time at t3 , e.g. after a few weeks, the user wants to resume the playback of the content CONT. He then actuates the Resume-key, causing control section 3 to start controlling the playback section 2 in the preview mode. The playback in the preview mode starts at a location before the stop location S, for example the begin location B.

During the preview mode the control section 3 continuously compares the actual playback position with the stop position S indicated by the information stored. As soon as the stop position S is reached the operation of playback section 2 is switched from the preview operation to the normal mode. This moment is indicated in Fig 3 by t4.

In Figure 3 the time required for the playback of the partition of the content between begin position E and stop position S during normal operation is indicated by Tn. The time required for this partition during the preview operation is indicated by Tp. Note that the condensing ratio, indication to which extent the playback time is condensed, is here equal to Tp/Tn.

In the embodiment described with reference to Fig 3 the playback in the preview mode starts at the begin location B. However also other locations between the begin location B and the stop location S are suitable.

There are several implementations possible for the preview control.

A very suitable and easy to implement embodiment is one in which in the content is played back in a fast forward operation at a higher speed than the normal speed.

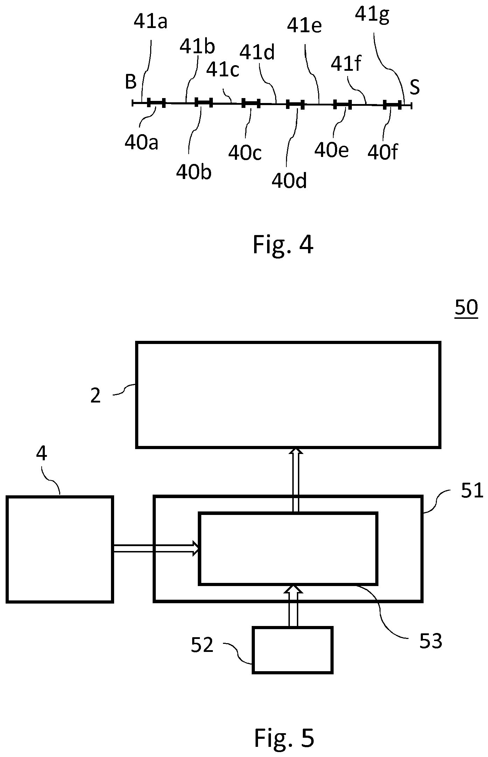

Fig 4 shows another implementation of the control in the preview mode. In this implementation the partition of the content between the begin location B and stop location S is divided in parts 40a, ..., 40f to be played back and parts 41 a, ... 41 g to be skipped. When the preview is started part 40a is played back, preferably at normal speed, but a playback with a speed which is higher than normal speed is also possible. For example a fast forward speed which is 2 to 8 times higher than the normal speed. This increases the time condensing, but the playback is slow enough for the user to follow what is happening. When the playback has reached the end of part 40a a jump over part 41 a is made so as to skip part 41 a and the playback continues with the playback of part 40b. In a similar way the parts 40c, 40d, 40e and 40f are subsequently played back while skipping the parts 41 b, 41 c 41 d, 41 e and 41 f. When the end of the last part 40f to be played back has been reached a jump over part 41 g is made to the stop position S and the control of the playback section is switched to the normal mode.

The parts 40 to be played back can be equally distributed over the partition between begin position B and the stop position S. It is also possible to use a more dedicated selection method for the locations of the parts 40. For example content analyzing techniques can be used to determine scenes changes in the content and uses the positions of the scene changes as the beginning positions of the parts 40.

Another possibility is to add meta data to the content which indicates which parts are most suitable to be included in the preview.

Fig 5 shows another embodiment of the content playback apparatus 50 according to the invention. The content playback apparatus 50 comprises a control section 51 which is similar to the control section 3, but which has a modified preview control function in which the preview mode is adjusted in dependence on a time difference Td between the moment t2 that the previous playback stopped and the moment t3 that that the user actuates the Resume-key.

This time difference Td is determined by a timer section 52. The timer section 52 determines on the basis of the received Stop and Resume control commands the time difference Td. The timer section 52 submits the determined time difference Td to the control section 51, which adjusts the preview mode in dependence on the determined time difference Td. There are several implementations suitable for the adjustment of the preview mode.

According to a first implementation the control section 51 is arranged to playback the content in the preview mode in a fast forward mode with a fast forward speed which is dependent on the time difference Td. For example the control section is arranged to play back with 2 times, 4 times, 16 times, 32 times and 64 times the normal speed, dependent on the time difference Td one of these speeds is selected. The longer the time difference, the lower the fast forward speed.

According to another implementation the restart position is adjusted in dependence on the time difference Td, such that the shorter the time difference the closer the restart position is set to the stop position S.

In case a preview mode is used in which the playback time of a partition is shortened by skipping parts of the partition as described hereinbefore with reference to Fig 4 , then the ratio between the skipped parts and the played back parts can be made dependent on the determined time difference Td. This can for example be realized by making the number of played back parts dependent on the time difference Td or by making the length of the skipped parts dependent on the determined time difference Td.

Hereinbefore several implementation are described for making the condensing ratio dependent on the determined time difference Td. This has the advantage that depending on the time expired before the resumption is initiated the user can be given more or less information about the content that he already played back. In case only a limited amount of time has been expired since the playback stop the user then needs only limited information to recall the content that is already played back. In that case the condensing ratio can be high. However in case a relative long time has expired the user needs more information to recall the content already played back. In that case a lower condensing ratio is needed.

The use of the preview mode is less suitable for situations wherein the time difference Td is very small or very long. For very short time differences the user will be able to recall the content already displayed without the playback of parts of the content already displayed. In this situation it is preferable to disable the control in the preview mode and start immediately with the playback in normal mode, starting from the stop position S.

In case the time difference Td is very long the preview may be not sufficient to recall the content already played. In this case it is also preferably to skip the preview control and start again from the beginning position with the playback in normal mode.

The disabling of the preview control can be implemented by modifying the timer section such that it detect whether the determined time difference Td is outside a range between a minimum value and a maximum value. The minimum value indicates the time difference below which the use of the preview mode has no or hardly sense, because the content played can be recalled without the use of the preview. The maximum value indicates the time difference above which the preview mode has no or hardly sense because too much information about the already played content is required to recall this content.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

## Claims

1. A content playback apparatus (1) including a resume function for resuming, in response to a resumption command, a playback of content at a stop position (S) where a previous playback has been has been stopped at a previous moment in time, the content playback apparatus comprising:
- a playback section (2) for playing back the content; **characterized in that** the content playback apparatus (1) comprises:
- a control section (3) for controlling the playback apparatus (1) in a normal playback mode and in a preview mode, whereby in the normal mode the content is played back at normal speed and whereby in the preview mode a part of the content located before the stop position is played back in a playback time condensing mode which requires less playback time than in the normal mode, which control section (3) is arranged to start in response to the resumption command a playback in the preview mode from a restart position located before the stop position and to switch control to the normal mode when the stop position is reached;
- a timer section (52) for determining a time difference between the moment the resumption command is given and the previous moment in time, whereby the control section is arranged to adjust the preview mode in dependence on the determined time difference, wherein the apparatus is arranged to detect whether the determined time difference is within a predetermined range and to disable the preview mode in response to a detection that the determined time difference is outside a predetermined range, whereby the predetermined range is between a minimum value of the time difference and a maximum value of the time difference, whereby the apparatus is arranged to start in response to the resumption command a playback in the normal playback mode, starting from a beginning position of the content in case the determined time difference is above the maximum value, and to start in response to the resumption command a playback in the normal playback mode, starting from the stop position, in case the determined time difference is below the minimum value.

2. A content playback apparatus as claimed in 1 wherein in the preview mode is a fast forward mode in which the content is played back with a fast forward speed which is higher than the normal speed.

3. A content playback apparatus as claimed in claim 1, whereby the control section (3) is arranged to cause skipping of first parts of the content and play back of second parts located in between the first parts.

4. A content playback apparatus as claimed in claim 1, wherein the restart position is dependent on the determined time difference.

5. A content playback apparatus as claimed in claim 4 wherein the dependence of the restart position on the determined time difference is such that a longer time difference results in a larger distance between the restart position and the stop position.

6. A content playback apparatus as claimed in claim 1, whereby a condensing ratio between the play back time required for a play back in the preview mode and the playback time for playback at the normal speed has a value which depends on the determined time difference, such that a longer time difference results in a lower condensing ratio.

## Patentansprüche

1. Inhaltswiedergabevorrichtung (1) mit einer Funktion zum Fortsetzen als Antwort auf einen Fortsetzungsbefehl, einer Wiedergabe von Inhalt an einer Stoppposition (S), wobei eine vorherige Wiedergabe zu einem früheren Zeitpunkt gestoppt worden ist, wobei die Inhaltswiedergabevorrichtung Folgendes umfasst:
- ein Wiedergabeteil (2) zur Wiedergabe des Inhalts, **dadurch gekennzeichnet, dass** die Inhaltswiedergabevorrichtung (1) Folgendes umfasst:
- ein Steuerteil (3) zur Steuerung der Wiedergabevorrichtung (1) in einem normalen Wiedergabemodus und in einem Vorschaumodus, wobei der Inhalt im normalen Wiedergabemodus mit einer normalen Geschwindigkeit wiedergegeben wird und ein Teil des Inhalts, der sich vor der Stoppposition befindet, im Vorschaumodus in einem zeitverdichtenden Wiedergabemodus wiedergegeben wird, der weniger Wiedergabezeit erfordert als der Normalmodus, wobei das Steuerteil (3) dazu dient, als Antwort auf den Fortsetzungsbefehl von einer vor der Stoppposition befindlichen Wiederanlaufposition eine Wiedergabe im Vorschaumodus zu starten und in den normalen Modus zu schalten, wenn die Stoppposition erreicht ist;
- ein Zeitgeberteil (52) zur Ermittlung einer Zeitdifferenz zwischen dem Zeitpunkt, wo der Fortsetzungsbefehl gegeben wird und dem früheren Zeitpunkt, wobei das Steuerteil dazu dient, den Vorschaumodus in Abhängigkeit von der ermittelten Zeitdifferenz zu regulieren, wobei die Vorrichtung dazu dient, festzustellen, ob die ermittelte Zeitdifferenz innerhalb eines vorgegeben Bereichs liegt, und den Vorschaumodus auszuschalten, wenn festgestellt worden ist, dass die ermittelte Zeitdifferenz außerhalb des vorgegeben Bereichs liegt, wobei der vorgegebene Bereich zwischen einem Mindestwert der Zeitdifferenz und einem Höchstwert der Zeitdifferenz liegt, wobei die Vorrichtung dazu dient, als Antwort auf den Fortsetzungsbefehl eine Wiedergabe im normalen Wiedergabemodus, beginnend von einer Anfangsposition des Inhalts, zu starten, wenn die ermittelte Zeitdifferenz den Höchstwert überschreitet, und als Antwort auf den Fortsetzungsbefehl eine Wiedergabe im normalen Wiedergabemodus, beginnend von der Stoppposition, zu starten, wenn die ermittelte Zeitdifferenz unter dem Mindestwert liegt.

2. Inhaltswiedergabevorrichtung nach Anspruch 1, wobei der Vorschaumodus ein Schnellvorlaufmodus ist, in dem der Inhalt mit einer schnellen Vorlaufgeschwindigkeit wiedergegeben wird, die höher ist als die normale Geschwindigkeit.

3. Inhaltswiedergabevorrichtung nach Anspruch 1, wobei das Steuerteil (3) dazu dient, zu bewirken, dass erste Teile des Inhalts übersprungen werden und zweite Teile, die sich zwischen den ersten Teilen befinden, wiedergegeben werden.

4. Inhaltswiedergabevorrichtung nach Anspruch 1, wobei die Wiederanlaufposition von der ermittelten Zeitdifferenz abhängt.

5. Inhaltswiedergabevorrichtung nach Anspruch 4, wobei die Abhängigkeit der Wiederanlaufposition von der ermittelten Zeitdifferenz so festgelegt ist, dass eine größere Zeitdifferenz einen größeren Abstand zwischen der Wiederanlaufposition und der Stoppposition zur Folge hat.

6. Inhaltswiedergabevorrichtung nach Anspruch 1, wobei ein Verdichtungsverhältnis zwischen der für eine Wiedergabe im Vorschaumodus erforderlichen Wiedergabezeit und der für die Wiedergabe mit normaler Geschwindigkeit erforderlichen Wiedergabezeit einen Wert aufweist, der von der ermittelten Zeitdifferenz abhängt, so dass eine größere Zeitdifferenz ein niedrigeres Verdichtungsverhältnis zur Folge hat.

## Revendications

1. Appareil de lecture de contenu (1) comportant une fonction de reprise permettant de reprendre en réponse à un ordre de reprise, la lecture du contenu au niveau d'une position d'arrêt (S) dans laquelle une lecture précédente a été arrêtée à un instant antérieur, l'appareil de lecture de contenu comprenant:
- une section de lecture (2) permettant de lire le contenu,
**caractérisé en ce que** l'appareil de lecture de contenu (1) comporte:
- une section de commande (3) permettant de commander l'appareil de lecture (1) dans un mode de lecture normal et dans un mode d'aperçu, dans le mode normal, le contenu étant lu à une vitesse normale et dans le mode d'aperçu une partie du contenu située avant la position d'arrêt étant lue dans un mode de condensation de la durée de lecture qui nécessite une durée de lecture moindre que dans le mode normal, la section de commande (3) étant réalisée pour commencer en réponse à l'ordre de reprise une lecture dans le mode d'aperçu à partir d'une position de redémarrage située avant la position d'arrêt et pour commuter la commande vers le mode normal lorsque la position d'arrêt est atteinte,
- une section d'horloge (52) permettant de déterminer la différence de temps entre l'instant auquel l'ordre de reprise est donné et l'instant antérieur, la section de commande étant réalisée pour régler le mode d'aperçu en fonction de la différence de temps déterminée, l'appareil étant réalisé pour détecter si la différence de temps déterminée est située dans une plage prédéfinie et pour désactiver le mode d'aperçu en réponse à la détection du fait que la différence de temps déterminée est située en dehors d'une plage prédéfinie, la plage prédéfinie étant située entre une valeur minimum de la différence de temps et une valeur maximum de la différence de temps, l'appareil étant réalisé pour commencer, en réponse à l'ordre de reprise, une lecture dans le mode de lecture normal, en partant de la position de début du contenu dans le cas où la différence de temps déterminée est située au-dessus de la valeur maximum et pour commencer, en réponse à l'ordre de reprise, une lecture dans le mode de lecture normal en partant de la position d'arrêt dans le cas où la différence de temps déterminée est située au-dessous de la valeur minimum.

2. Appareil de lecture de contenu conforme à la revendication 1, dans lequel le mode d'aperçu est un mode d'avance rapide dans lequel le contenu est lu avec une vitesse d'avancement rapide qui est supérieure à la vitesse normale.

3. Appareil de lecture de contenu conforme à la revendication 1, dans lequel la section de commande (3) est réalisée pour sauter des premières parties du contenu et lire des secondes parties situées entre les premières parties.

4. Appareil de lecture de contenu conforme à la revendication 1, dans lequel la position de redémarrage dépend de la différence de temps déterminée.

5. Appareil de lecture de contenu conforme à la revendication 4, dans lequel la position de redémarrage dépend de la différence de temps déterminée de sorte qu'une différence de temps plus grande entraîne une plus grande distance entre la position de redémarrage et la position d'arrêt.

6. Appareil de lecture de contenu conforme à la revendication 1, dans lequel le taux de condensation entre la durée de lecture nécessaire pour une lecture dans le mode d'aperçu et la durée de lecture pour une lecture à la vitesse normale a une valeur qui dépend de la différence de temps déterminée de sorte qu'une plus grande différence de temps entraîne un taux de condensation inférieur.
